# EUROPEAN PATENT APPLICATION

(11) **EP 2 420 680 A2**
(43) Date of publication of application: **22.02.2012**
(21) Application number: 11177690.2
(22) Date of filing: 16.08.2011
(51) Int. Cl.: F15B 1/08

(54) **Fluid Manifold**

(30) Priority: 18.08.2010 US 374831 P
(71) Applicant: PARKER HANNIFIN CORPORATION, Cleveland, OH 44124-4141 (US)
(72) Inventor: Rafael Alberto Toledo, Rockford, IL 61107 (US)
(74) Representative: Belcher, Simon James

(57) **Abstract**

A hydraulic accumulator (10) has a rotatable gas manifold (12). The accumulator (10) includes a shell (16) having a hydraulic fluid pressure end (26) and a charged gas end (28). The charged gas end is closed by a closure assembly (44). The manifold (12) includes a body (102) and a locking connector (150). The body (102) includes fluid ports (112, 114, 116) that are in fluid communication with an annular connector port (182). The locking connector (150) includes a threaded stem (152) that is connected to the closure assembly (44) and provides a single point rotatable connection for attaching, detaching and aligning the fluid ports (112, 114, 116) relative to the accumulator (10).

## Description

The present invention relates to a fluid manifold. More specifically, this invention relates to a fluid manifold and a hydraulic accumulator.

Fluid manifolds are well known and may act as connection devices for fluid components. For example, fluid manifolds may be used in fluid systems and may act to provide a connection device between and among fluid components of the fluid system. The fluid components that are connected by the manifold may for example include a component source of fluid energy and a component recipient of fluid energy or multiple such components. The component source of fluid energy may for example include a fluid pump or a fluid pressure storage device. The component recipient of fluid energy may for example include a fluid valve, a fluid motor, and/or another fluid pressure storage device.

Accumulators are also well known and act as storage devices for storing energy in the form of fluid under pressure. For example, hydraulic fluid accumulators may store hydraulic fluid under pressure for use by other fluid components. Since hydraulic fluid is non-compressible, hydraulic accumulators may include a pressurization source for acting upon the stored hydraulic fluid. Known pressurization sources for hydraulic accumulators include for example springs, a weight that is acted upon by gravity, or a charged gas (or gas under pressure) such as compressed air. Charged gas is the most commonly used pressurization source for hydraulic accumulators There are two main types of charged gas hydraulic accumulators; a bladder accumulator and a piston accumulator. In a bladder accumulator, the interior of the accumulator body or shell is divided by an expandable bladder or diaphragm into two chambers. Hydraulic fluid is received in and stored in one of the chambers, while the charged gas is received in and stored in the other chamber. In many bladder accumulators, the expandable bladder is shaped like a balloon with an opening to the interior of the bladder fixedly supported relative to one end of the accumulator body. In piston accumulators, a floating piston located within and sealing against the accumulator body defines a boundary between the two chambers of the accumulator. The charged gas acts upon one side of the floating piston to apply a force to the hydraulic fluid that is located on an opposite side of the floating piston. In both bladder and piston accumulators, aligning, connecting and disconnecting multiple fluid components or conduits to and from the accumulator when installing or exchanging or servicing the accumulator can, at times, be difficult and/or labour intensive, particularly when the accumulator is large and heavy and is fixed in place relative to another structure.

The invention present provides a fluid manifold and a fluid manifold in combination with a fluid component. The fluid component may be a charged gas chamber of a hydraulic accumulator. The manifold may include multiple fluid ports and a single point rotatable connection for connecting the manifold multiple ports to the accumulator. The fluid manifold may provide a connection for the charged gas source to the charged gas chamber and may be rotated through 360 degrees about a longitudinal axis of the accumulator. The rotatable gas manifold may simplify installation of the accumulator by enabling its associated fluid components and/or conduits to be easily aligned with, connected to and disconnected from the accumulator. Thus, when large accumulators are installed in a system, the accumulators may be fixed in place relative to their support structure without the need to align or realign the other fluid components and/or conduits associated with the charged gas side of the accumulator.

The invention further provides a fluid manifold for use with a fluid component that includes a fluid component fluid port. The fluid manifold may include a body and a locking connector. The body may have a plurality of manifold individual fluid ports and a manifold common fluid port. Passages in the body may establish fluid communication between the manifold individual fluid ports and the manifold common fluid port. The locking connector may have a locking surface for attaching the manifold body to the fluid component, with the manifold common fluid port in fluid communication with the fluid component fluid port. The body may be rotatable relative to the locking connector.

The locking connector may include a fluid flow path. The locking connector fluid flow path may be in fluid communication with the manifold common fluid port. The manifold common fluid port may be annular, and the locking connector may extend longitudinally through the annular manifold common fluid port.

The manifold common fluid port may be defined between the body and the locking connector. The body may include a longitudinally extending opening, and the locking connector may be disposed in the opening. The manifold common fluid port may be disposed along the opening. The manifold common fluid port may include an annular groove disposed along the opening. The manifold individual fluid ports may extend radially from the opening.

The locking connector may include a fluid passage, and the fluid passage in the locking connector may include a longitudinally extending passage and a radially extending passage. The radially extending passage may be in fluid communication with the manifold common fluid port and with the longitudinally extending passage. The locking connector may include a stem, and the longitudinally extending passage and the radially extending passage may be disposed in the stem. The locking surface of the locking connector may include a threaded portion on an exterior surface of the stem, and the longitudinally extending passage may be disposed radially inwardly of the threaded portion. The locking connector may include a head, and the head may engage the body.

Annular seals may be disposed between the stem and the opening on longitudinally opposite sides of the passages in the body that extend from the individual fluid ports to the common fluid port. The annular seals may be disposed on longitudinally opposite sides of the radial passage in the stem. The locking connector may be rotatable relative to the body, and the radial passage in the stem may be in fluid communication with the common manifold fluid port in all rotatable positions of the manifold relative to the body. The locking connector is rotatable through 360 degrees relative to the body.

The fluid manifold may be arranged in combination with a fluid component, and the fluid component may be a hydraulic accumulator. The hydraulic accumulator may have a longitudinal axis, the body may have a longitudinal axis, and the axes may be co-axial. The hydraulic accumulator may include a shell having first and second ends and defining an interior volume, and a movable member may divide the interior volume into two variable volume chambers each of which includes an associated opening. One chamber may be adapted to receive a non-compressible fluid and the other chamber may be adapted to receive a charged gas. A closure assembly may close the opening to the charged gas chamber, and the closure assembly may include the fluid component port. The locking connector may removable attach the body to the closure assembly.

The locking connector may include a lock bolt having a stem portion through which a central fluid connector passage extends, and a plurality of radial passages may extend through the stem portion and interconnect with the central fluid connector passage. The lock bolt may further include a plurality of annular grooves, and each annular groove may receive an annular elastomeric seal. At least one of the annular grooves may be located between the plurality of radial passages and the head portion of the lock bolt. At least one of the annular grooves may be located between the plurality of radial passages and a threaded portion of the lock bolt.

Embodiments of this invention will now be described in further detail by way of example with reference to the accompanying drawings, in which:
Fig. 1 is a side elevation view of a fluid manifold and fluid accumulator according to a preferred embodiment of this invention;
Fig. 2 is a cross sectional view of the fluid manifold and fluid accumulator illustrated in Fig. 1;
Fig. 3 is an enlarged cross sectional view of the fluid manifold and one end of the fluid accumulator illustrated in Fig. 1;
Fig 4 is partially exploded perspective view of the fluid manifold illustrated in Fig. 1;
Fig. 5 is an exploded side elevation view of the fluid manifold illustrated in Fig. 1;
Fig. 6 is a cross sectional view taken along reference view line 6-6 in Fig. 5; and
Fig. 7 is an enlarged view of the portion of Fig. 6 indicated by reference view line 7-7.

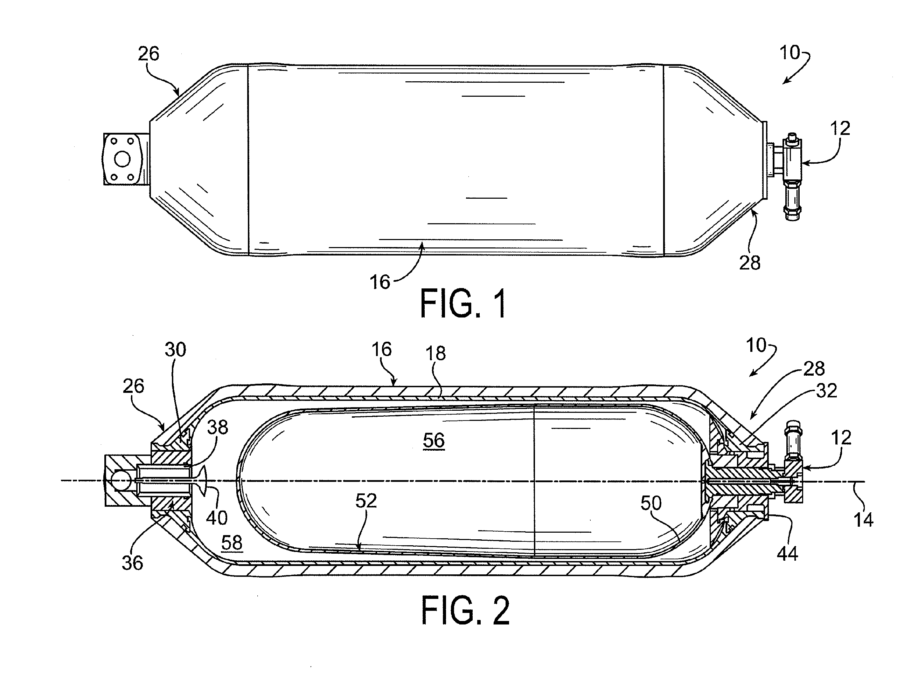

Referring to the drawings, Figs. 1 and 2 show a fluid component 10 and a fluid manifold 12 constructed in accordance with the present invention. The fluid component 10 in the preferred embodiment is a hydraulic fluid accumulator. The fluid component or accumulator 10 and the fluid manifold 12 may be used in any suitable stationary or mobile hydraulic system. In the preferred embodiment, for example, the fluid accumulator 10 and fluid manifold 12 are used in a mobile vehicle hybrid hydraulic system. In this application, the accumulator 10 and manifold 12 are mounted on the vehicle (not shown). The accumulator 10 provides an energy storage device that receives and stores energy that may be generated during deceleration of the vehicle. The energy is stored as fluid under pressure, and the stored energy may be used at a later time by a component recipient of the fluid energy. For example the component recipient that uses the stored energy may be a hydraulic motor that causes movement of a component of a hydraulically operated boom or that is connected to the drive wheels of the vehicle to propel the vehicle.

The accumulator 10 and gas manifold 12 are longitudinally co-axial along a longitudinal axis 14. The accumulator 10 includes a shell 16 that defines an interior volume. The shell 16 may be made of any suitable material for containing fluid under pressure. In one embodiment, the shell 16 is made from steel. In the embodiment illustrated in the drawings, the shell 16 is made from a suitable carbon fibre and resin composite material. A liner 18 is attached to the shell 16. The liner 18 is of any suitable material, and in the preferred embodiment the liner 18 is of a high density polyethylene material. The shell 16 has opposite first and second ends 26 and 28. As further described below, the first end 26 provides a hydraulic fluid pressure end of the accumulator 10, and the second side 28 provides a charged gas end of the accumulator 10. The end 26 includes a hydraulic fluid pressure annular end piece 30, and the end 28 includes a charged gas annular end piece 32. The hydraulic fluid pressure end piece 30 has a threaded interior surface that defines an opening. The liner 18 is attached to the end pieces 30 and 32 and prevents fluid escape from the shell 16.

The opening of the shell 16 at the hydraulic fluid pressure end 26 is closed by a first end closure assembly 36, shown as a port block assembly that is threadedly inserted into the threaded interior surface of the end piece 30. The illustrated port block assembly 36 includes a spring 38 that biases a valve poppet 40 toward an opened position. As described further below, the port block assembly 36 is adapted to enable flow of hydraulic fluid into and out of a variable volume defined inside the liner 18 of the shell 16. The opening of the shell 16 at the second end 28 is closed by a second end closure assembly 44 that is joined to the end piece 32 by a clearance fit. The second closure assembly 44 illustrated is adapted to support an open end portion 50 of an expandable bladder 52 and to provide a component fluid port that enables a flow of the charged gas into and out of the interior of the supported bladder 52. The bladder 52 is of any suitable elastomeric polymeric material, and in the preferred embodiment the bladder 52 is of low temperature nitrile material. The bladder 52 divides the volume of the shell 16 into two variable volume chambers. As illustrated in Fig. 2, one chamber 56 is located within the bladder 52 and the other chamber 58 is located outside the bladder 52 and between the bladder 52 and the liner 18 of the shell 16.

As is known in the art, the bladder 52 is filled with a charged gas, typically to a predetermined charge pressure, and remains under pressure during operation of the accumulator 10. As hydraulic fluid enters chamber 58 to store energy as fluid under pressure, for example when the above described vehicle is decelerating, the charged gas in the bladder 52 is compressed. During this mode of operation, the volume of the hydraulic fluid chamber 58 expands and the volume of the charged gas chamber 56 and bladder 52 contract in size. The charged gas in the chamber 56 maintains the pressure of the stored hydraulic fluid in the chamber 58.. When the energy stored in the hydraulic fluid is to be used during another mode of operation, the hydraulic fluid exits from the chamber 58. During this mode of operation, the volume of the charged gas chamber 56 and bladder 52 expands to reduce the pressure of the charged gas in the bladder back to the charge pressure and the volume of the hydraulic fluid chamber 58 decreases. When the bladder 52 expands a sufficient distance so as to close the poppet 40, further fluid flow from the chamber 58 is prevented.

In this manner, the end piece 30 provides access for hydraulic fluid flow to and from the hydraulic fluid chamber 58 of the accumulator 10 defined between the liner 18 and the bladder 52. The end piece 32 provides access for charge gas into the charged gas chamber 56 of the accumulator 10 inside the bladder 52. Due to the repeated expansion and contraction of the bladder 52 during operation, which may occur at high and low operating temperature extremes, the accumulator 10 may be periodically removed and replaced during servicing of the hydraulic system in which the accumulator 10 is used. The manifold 12 facilitates this removal and replacement, as further described below.

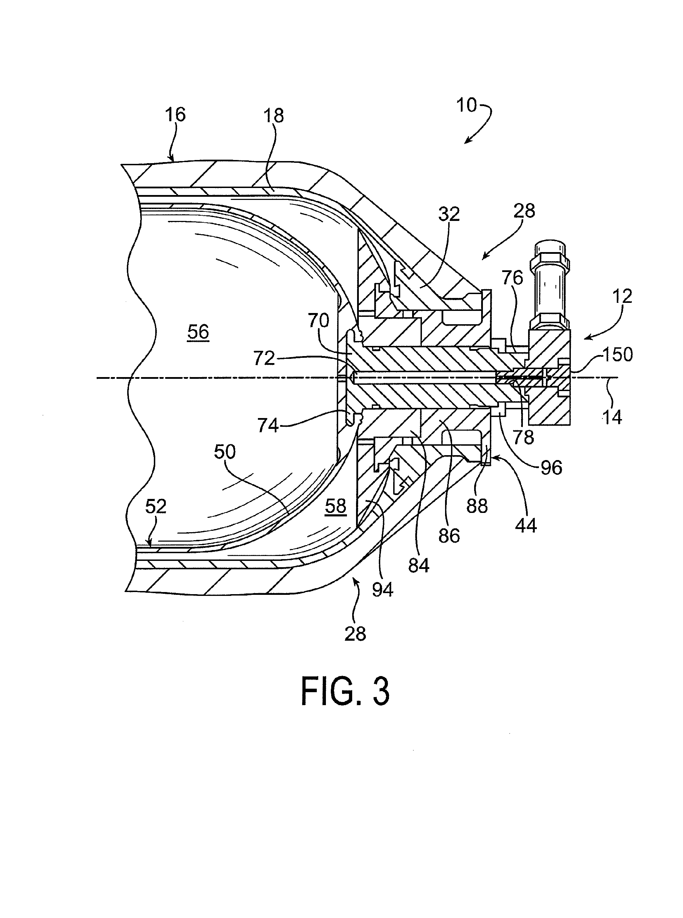

Referring now to Fig. 3, the second closure assembly 44 and the fluid manifold 12 are illustrated. The second closure assembly 44 includes fluid component port member 70 that defines a fluid passage 72. The fluid passage 72 provides a fluid port for the fluid component or accumulator 10. The fluid component port member 70 includes a head portion 74 defined by a radially outwardly extending flange at a first end and a threaded exterior surface 76 near a second, opposite end. The fluid passage or port 72 of the fluid component port member 70 adjacent the second end includes a stepped portion that widens the passage 72 at the second end of the fluid component port member 70. A threaded interior surface 78 is provided at the right end of the fluid passage 72 as viewed in Fig. 3.

The second closure assembly 44 further includes a bottom or longitudinally inner gas plug 84 and a top or longitudinally outer gas plug 86. The top gas plug 86 is joined by a clearance fit to the end piece 32 so that a head portion 88 of the top gas plug 86 abuts against an end surface of the end piece 32. The bottom gas plug 84 supports an anti-extrusion ring 94 and, when the second closure assembly 44 is assembled, abuts against the top gas plug 86. The bladder 52 includes the open end portion 50 that is received by the head portion 74 of the fluid component port member 70 so as to align an opening in the bladder 52 with the fluid passage or port 72 in the fluid component port member 70. In the assembled second closure assembly 44, the opened portion 50 of the bladder 52 is held securely between the head portion 74 of the fluid component port member 70 and the bottom gas plug 84 by a tension created by tightening a jam nut 96 on the threaded portion 76 of the stem member such that the jam nut 96 abuts against the top gas plug 86.

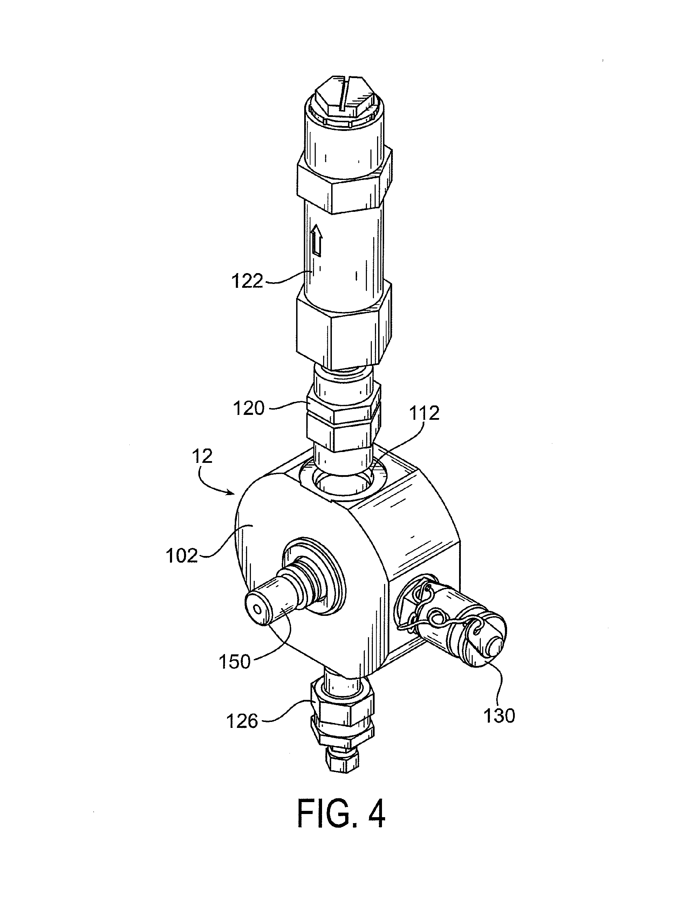

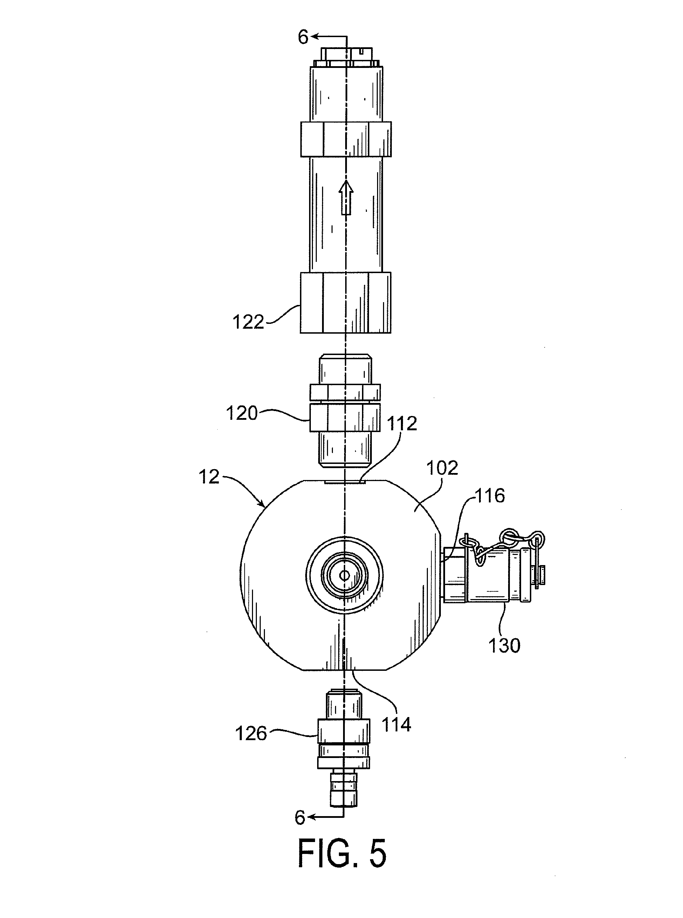

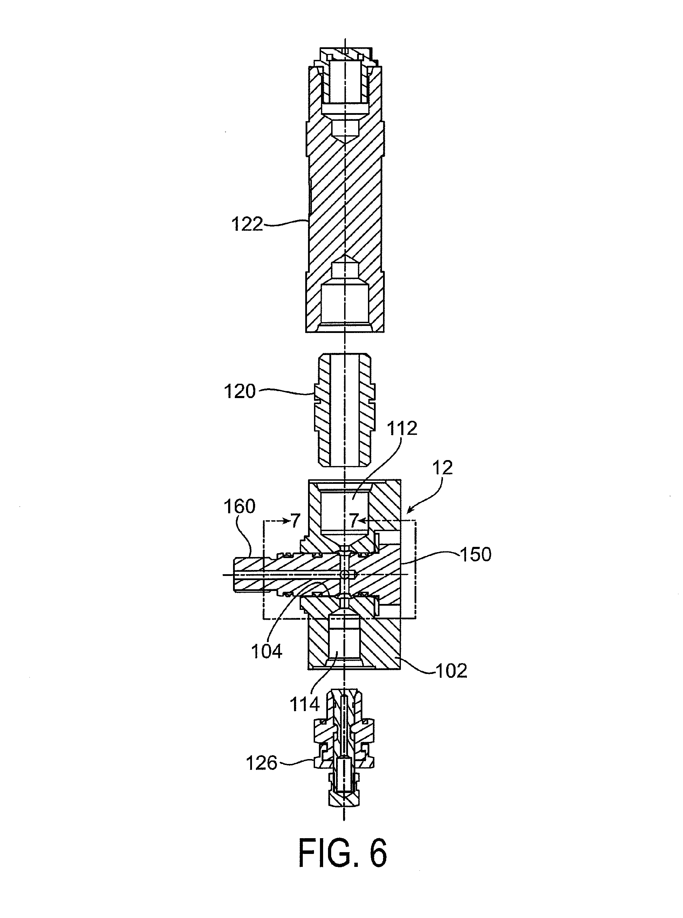

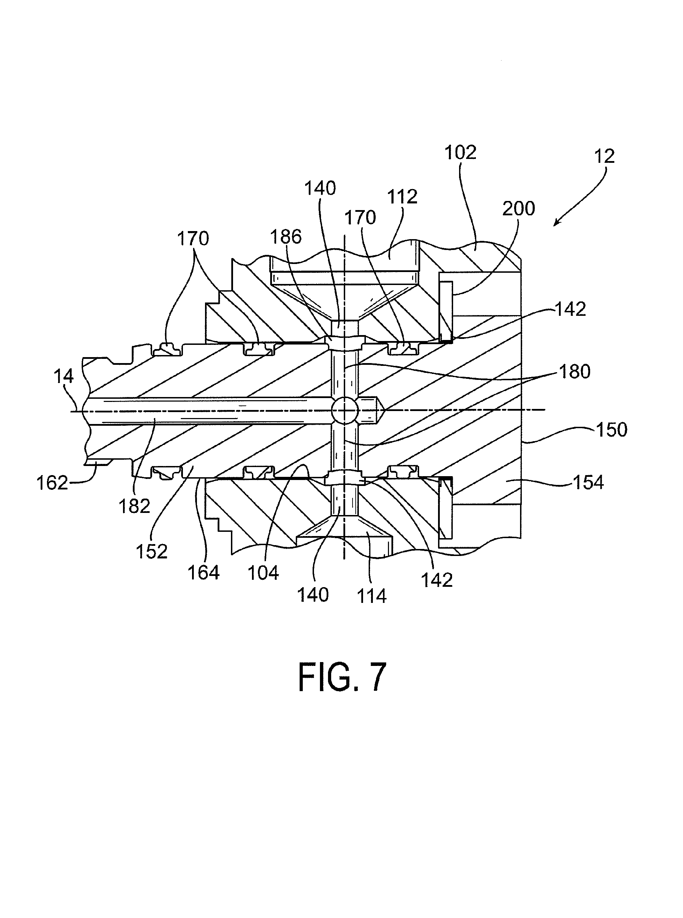

Referring now to Figs. 3 to 7, the manifold 12 is affixed to the fluid component port member 70 of the second closure assembly 44 and provides a single point connection for connecting to the charged gas end 28 of the accumulator 10 the valves and fittings and components that are associated with the charged gas end 28. Fig. 4 is a partially exploded perspective view of the rotatable gas manifold 12 with its associated valves and fittings. Fig. 5 is a partially exploded elevation view of the rotatable gas manifold 12 with its associated valves and fittings. Fig. 6 is a cross-sectional view of the rotatable gas manifold 12 with its associated valves and fittings taken along reference view line 6-6 in Fig. 5. Fig. 7 is an enlarged view of the portion of the gas manifold 12 in Fig. 6 surrounded by the dashed line 7-7.

Continuing with reference to Figs. 4 to 7, the gas manifold 12 includes a body 102 that is a generally annular flat disk shaped member. The body 102 includes a longitudinally extending opening or central passage 104 that extends from side to side through the body 102 in a direction generally coaxial with the longitudinal axis 14. A plurality of manifold individual fluid ports 112, 114 and 116 extend in a radial direction generally perpendicular to the longitudinal axis 14 outwardly from the opening 104 to the outer surface of the body 102. Each of the fluid ports 112, 114 and 116 terminate at a threaded bore, two of which are illustrated in Figs. 6. Port 112 is adapted to receive a known standard threaded fitting 120 for connecting a known standard thermal relief valve 122 to the body 102 and opening 104 of the gas manifold 12. Port 114 is adapted to receive a known standard high pressure unidirectional air valve assembly 126 for connection of the charged gas chamber 56 to a conduit (not shown) associated with an external air pressure source (not shown) for charging the chamber 56 of the accumulator 10 through the manifold 12. The port 116, illustrated as being located equidistance between ports 112 and 114, receives a standard diagnostic test port fitting 130 for enabling diagnostic testing. Each port 112, 114 and 116 includes a radially extending passage 140, two of which are shown in Fig. 7. The passages 140 establish fluid communication between each port 112, 114 and 116 and an enlarged diameter annular groove 142 that is disposed in and along a central portion of the primary passage or opening 104 of the body 102. In the preferred embodiment, the annular groove 142 extends for a full circumferential distance of 360 degrees about the primary passage or opening 104 of the body 102. Unless otherwise mentioned, the manifold 12 and its associated conduits and components are preferably of a suitable carbon steel material.

The gas manifold 12 also includes a generally cylindrical locking connector 150, which is in the general shape of a lock bolt and provides a single point mechanical and fluid connection for the manifold 12 with the accumulator 10. The locking connector 150 is rotatable through 360 degrees relative to the body 102. In the preferred embodiment, the locking connector 150 has a stepped exterior surface and includes a locking connector stem portion 152 and a locking connector head portion 154. The head portion 154 provides a wrench receiving exterior surface and has a larger diameter than the stem portion 152. The head portion 154 is recessed into an enlarged diameter portion of the main opening 104 and engages the main body 102. The stem portion 152 extends from the head portion 154 into and along the opening or passage 104 of the manifold body 102 and terminates with a smaller diameter portion 160 having a threaded exterior surface. The smaller diameter threaded portion 160 is adapted to be threadedly received in the passage 72 of the fluid component port member 70 for affixing the gas manifold 12 to the second closure assembly 44 of the fluid component or accumulator 10 with a single point connection. In an alternative embodiment not shown in the drawings, the head portion 154 could be formed as a flange that is connected to the main body 102 by two or more bolts that are separate from the stem portion 152 while the stem portion 152 and the annular groove 142 maintain the single point fluid connection of the manifold 12 to the accumulator 10.

An intermediate generally cylindrical exterior portion 164 of the locking connector 150 is located on the stem portion 152 between the smaller diameter portion 160 and the head portion 154. A plurality of radial passages 180, two of which are illustrated in Fig. 7, extend from a central longitudinal connector passage 182 of the locking connector 150 radially outwardly to the groove 142 and the intermediate exterior portion 164 of the locking connector 150. The intermediate portion 164 includes three annular grooves (Fig. 7), two of which are disposed on longitudinally opposite sides of the passages 140, 180 for receiving standard annular seals 170. The seals 170 are D-ring seals of a suitable elastomeric polymeric material, and in the preferred embodiment the seals 170 are of a polyurethane material. One of the seals 170 is disposed longitudinally intermediate the passages 140, 180 and the head portion 154. Another of the seals 170 is disposed longitudinally intermediate the passages 140, 180 and the threaded portion 160. The longitudinal connector passage 182 extends from the free end of the locking connector 150 at the small diameter portion 160 and intersects each of the radial passages 180, to establish fluid communication between the groove 142 and the fluid component fluid port 72 in all rotational positions of the locking connector 150 relative to the body 102. The passage 182 shown in the drawings is radially inward of the threaded portion 160. The number of radial passages 180 may be varied as desired by a designer; however, the number preferably includes at least one radial passage 180 for every individual fluid port in the main body 102 of the gas manifold 12. Preferably, the number of radial passage 180 outnumbers the number of ports in the main body 102 of the gas manifold 12. As illustrated in Fig. 7, the seal grooves are disposed on each longitudinal side of each radial passage 180 and 140 for receiving a seal 170 that seals against the central opening 104 when the gas manifold 12 is assembled on the accumulator 10. The annular groove 142 of the opening 104 in the body 102 and the intermediate portion 164 of the locking connector 150 cooperatively define a manifold common port 186 (Fig. 7) along the opening 104. The radially extending passages 180 establish fluid communication between the manifold common fluid port 186 and fluid component fluid port 72 through the longitudinally extending passage 182 in all rotational positions of the locking connector 150 relative to the body 102.

When the gas manifold 12 is mounted to the second closure assembly 44 of the fluid component 10, the locking connector 150 is disposed in the opening 104 in the body 102 and is threadedly connected to the port member 70. A washer 200 is positioned between the head portion 154 of the lock bolt 150 and the main body 102 and, as the lock bolt 150 is tightened, the head portion 154 presses the main body 102 of the gas manifold 12 against the fluid component port member 70 for fixing the gas manifold relative to the accumulator 10. At least one radial passage 180 in the lock bolt 150 aligns with each of the passages 140 or its associated groove 142 in the main body 102 such that the charged gas may pass through the ports to the radial passages 180 and central passage 182 to the passage or port 72 of the fluid component port member 70 and into the bladder 52 through opening. Should a position of the main body 102 need to be rotated, for example, so as to align valve assembly 126 with an associated conduit, the lock bolt 150 may be loosened and the body 102 rotated to its appropriate position. Once the body 102 is rotated to its appropriate position, the lock bolt 150 again is tightened for affixing the gas manifold 12 relative to the fluid component port member 70. Again, radial passages 180 in the lock bolt 150 align with the ports in the main body 102 of the gas manifold 12. The gas manifold 12 enables alignment of the various ports and associated valves without the need to disassemble the accumulator 10, particularly the second closure assembly 44 of the accumulator 10.

Presently preferred embodiments of the invention are shown and described in detail above. Changes and modifications can be made. For example, instead of having a bladder 52, the accumulator 10 may be a piston accumulator. Also, while the terms first and second, one and another, left and right are used to more clearly describe the structure and operation of the manifold 12 and accumulator 10, it should be understood these terms are used only for purposes of clarity and may be interchanged as appropriate.

## Claims

1. A fluid manifold for use with a fluid component that includes a fluid component fluid port, the fluid manifold comprising a body and a locking connector, the body having a plurality of manifold individual fluid ports and a manifold common fluid port, passages in the body establishing fluid communication between the manifold individual fluid ports and the manifold common fluid port, the locking connector having a locking surface for attaching the manifold body to the fluid component with the manifold common fluid port in fluid communication with the fluid component fluid port, and the body being rotatable relative to the locking connector.

2. The fluid manifold as claimed in claim 1, in which the locking connector includes a fluid flow path in fluid communication with the manifold common fluid port.

3. The fluid manifold as claimed in claim 1 or claim 2, in which the manifold common fluid port is annular, and the locking connector extends longitudinally through the annular manifold common fluid port.

4. The fluid manifold as claimed in any of claims 1 to 3, in which the manifold common fluid port is defined between the body and the locking connector.

5. The fluid manifold as claimed in any of claims 1 to 4, in which the body includes a longitudinally extending opening, and the locking connector is disposed in the opening.

6. The fluid manifold as claimed in claim 5, in which the manifold common fluid port is disposed along the opening.

7. The fluid manifold as claimed in claim 5 or claim 6, in which the manifold individual fluid ports extend radially from the opening.

8. The fluid manifold as claimed any of claims 5 to 7, in which the locking connector includes a fluid passage, the fluid passage in the locking connector includes a longitudinally extending passage and a radially extending passage, and the radially extending passage is in fluid communication with the manifold common fluid port and with the longitudinally extending passage.

9. The fluid manifold as claimed in claim 8, including annular seals disposed between a stem portion of the locking connector and the opening on longitudinally opposite sides of the radial passage in the stem.

10. The fluid manifold as claimed in claim 8 or claim 9, in which the locking connector is rotatable through 360 degrees relative to the body, and the radial passage in the stem is in fluid communication with the common manifold fluid port in all rotatable positions of the manifold relative to the body.

11. An assembly which comprises a fluid manifold as claimed in claim 1 in combination with a fluid component, in which the fluid component is a hydraulic accumulator.

12. An assembly as claimed in claim 11, in which the hydraulic accumulator has a longitudinal axis, the body has a longitudinal axis, and the axes are co-axial.

13. An assembly as claimed in claim 12, in which the hydraulic accumulator includes a shell having first and second ends and defining an interior volume, a movable member divides the interior volume into two variable volume chambers each of which includes an associated opening, one chamber is adapted to receive a non-compressible fluid and the other chamber is adapted to receive a charged gas, a closure assembly closes the opening to the charged gas chamber, the closure assembly includes the fluid component port, and the locking connector removably attaches the body to the closure assembly.

14. An assembly as claimed in claim 13, in which the locking connector includes a lock bolt having a stem portion through which a central fluid connector passage extends, and a plurality of radial passages extends through the stem portion and interconnects with the central fluid connector passage.

15. An assembly as claimed in claim 14, in which the lock bolt further includes a plurality of annular grooves, each annular groove being suitable to receive an annular elastomeric seal.
